# EUROPEAN PATENT APPLICATION

(11) **EP 2 014 559 A1**
(43) Date of publication of application: **14.01.2009**
(21) Application number: 08103052.0
(22) Date of filing: 30.06.2000
(51) Int. Cl.: B65B 59/00, B65B 25/14, B65G 17/26

(54) **A product packaging machine with rapid adjustment system to change over to products of a different size**

(30) Priority: 02.07.1999 IT BO990370; 09.09.1999 IT BO990484
(62) Divisional of application: 00830458.6
(71) Applicant: Tissue Machinery Company S.p.A., 40057 Cadriano di Granarolo Emilia (BO) (IT)
(72) Inventor: Zagnoni, Christian, c/o TISSUE MACHINERY COMPANY S.p.A., 40057 Cadriano di Granarolo Emilia (Bologna) (IT)
(74) Representative: Lanzoni, Luciano

(57) **Abstract**

An improved packaging machine (1) for the packaging of products (5), in particular, rolls of paper, comprises a packaging station (1a) equipped with a feed table (2) for the products (5), positioned between two walls (3); pushers (4) operating in pairs to move the products (5) along the feed table (2); and means for driving the pushers (4). The machine (1) comprises means (12, 13; 66; 61a, 61b, 63) for adjusting the spacing of the pushers (4) and control means (14) that interact with the adjustment means in such a way as to vary the spacing of the pushers (4) according to changes in the size and style of the required packages of products (5).

## Description

The present invention relates to the field of automatic packaging machinery, where the products to be packaged move along a feed line at predetermined, equal distances from each other.

The invention relates in particular, but without restricting the scope of the inventive concept, to an improved packaging machine to package paper rolls or groups of paper rolls for sanitary or domestic use, this type of machine being of the known type, described, for example in Italian Patents no. 1 305 810 and 1 299 896.

The machine basically comprises a horizontal product feed table positioned between two vertical walls; mobile, mechanical pushers that push the products along the feed table; and means for driving the pushers. The pusher drive means comprise at least a pair of shafts, namely, a drive shaft and a driven shaft, equipped with pulleys and two pairs of long, endless chains running in a horizontal direction parallel with each other around the pulleys, to form a chain drive system that supports the pushers extending towards the product feed table below.

In machines of this kind, the packaging cycle includes a stage in which the rolls or groups of rolls are transferred one after the other on the feed table by the mechanical pushers, which are suitably spaced. The pushers are mounted above the products on a motor-driven carriage and extend from the carriage towards the feed table. The pushers combine with each other and with the feed table to form receptacles designed to contain the products and varying in size according to the size of the package required. The carriages are slidably supported at their ends by guides made in the machine structure and are driven by the above mentioned chain drive system which comprises the four motor-driven, parallel, endless chains. One pair of endless chains connects all the carriages supporting the pushers located at the back of the products, while the other pair of endless chains connects all the carriages supporting the pushers located at the front of the products.

In machines of the type described above, the pusher spacing must be periodically adjusted when, for production requirements, packages of different sizes and styles have to be made. Thus, the space between the pushers must be able to accommodate not only individual products of a different size but also packages containing a different number of products so that the same machine can be used to make packages in different sizes and styles.

To enable pusher spacing to be adjusted, the endless chains supporting the pushers are adjustably mounted so that, when necessary, they can slide relative to each other in such a way as to change the position of the pushers relative to each other.

However, to enable this adjustment to be carried out in the known machines described above, the machine must be stopped and the spacing between the pushers mechanically adjusted according to the required package size and style.

These solutions limit the versatility of the machines, that is to say, they reduce the machine's ability to rapidly adjust to different packaging requirements.

The aim of the present invention is to enhance the versatility of the packaging machine in terms of ability of adjust to product size and style changes by reducing adjustment time and simplifying adjustment procedures.

Accordingly, the invention provides an improved packaging machine designed to package products, in particular paper rolls in accordance with one or more of the appended claims.

The technical features of the present invention, in accordance with the above-mentioned aims, are set out in the claims herein and the advantages more clearly illustrated in the detailed description which follows, with reference to the accompanying drawings, which illustrate a preferred embodiment without limiting the scope of application, and in which:
- Figure 1 is a partial elevation view of a machine made according to the present invention;
- Figure 2 is a schematic top plan view of the machine illustrated in Figure 1;
- Figure 3 shows a first embodiment of a part of the machine illustrated in Figures 1 and 2;
- Figure 4 shows a second embodiment of the part illustrated in Figure 3;
- Figure 5 is a scaled-up view of the machine illustrated in Figure 1;
- Figure 6 is a scaled-up view of a part of the machine in a cross section through line VI-VI in Figure 1;
- Figure 7 is a scaled-up view of an alternative embodiment of the same part of the machine as that shown in Figure 6, in a cross section through line VI-VI in Figure 1.

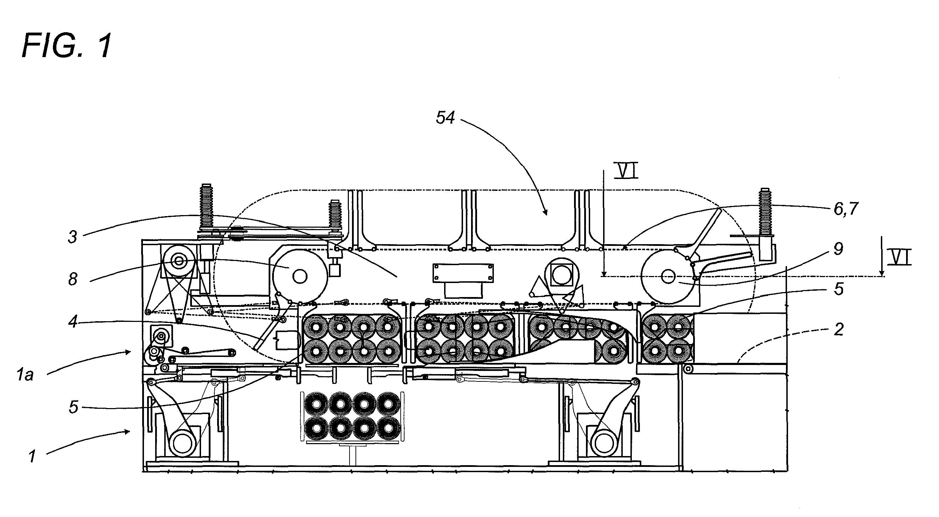

With reference to Figures 1 to 4, the numeral 1 indicates as a whole an improved packaging machine for the packaging of products 5, in particular, rolls of paper for sanitary or domestic use.

As shown in Figure 1, the machine 1 basically comprises a packaging station 1a equipped with a feed table 2 for the products 5, positioned between two vertical, parallel walls 3; pushers 4 of the products 5; and means for driving the pushers 4.

Looking in more detail, the feed table 2 is horizontal, supports the products 5 on it and has mounted over and parallel to it a chain drive system 54 from which the pushers 4 project inwards over, and downwards towards, the feed table 2.

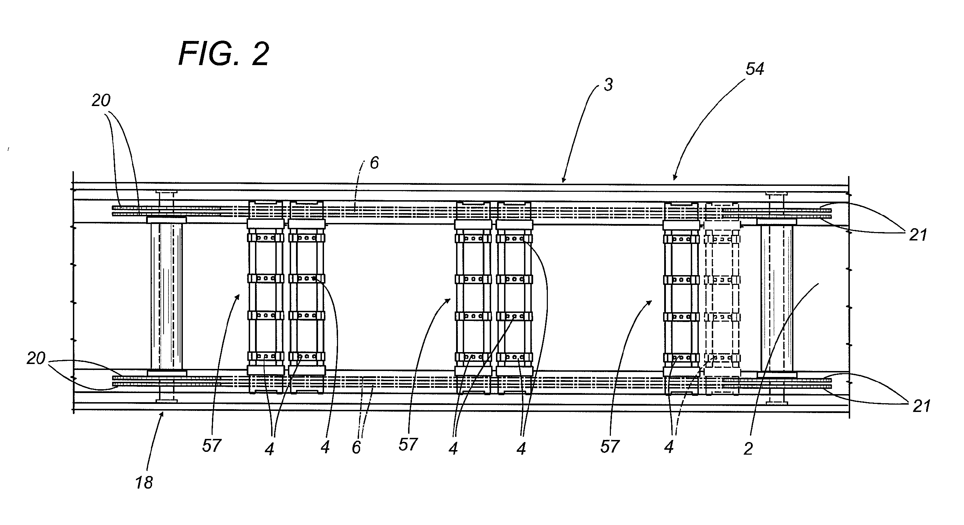

The chain drive system 54 (Figure 2) comprises four endless chains 6, 7 mounted in pairs which connect separate sets 57 of pushers 4. The pushers 4 are equally spaced and the spaces between consecutive pairs of them accommodate the products 5 or ordered groups of products 5, making them move forward in ordered fashion along the feed table 2 so that they can be wrapped in a sheet of wrapping material according to methods which are not described since they are very well known.

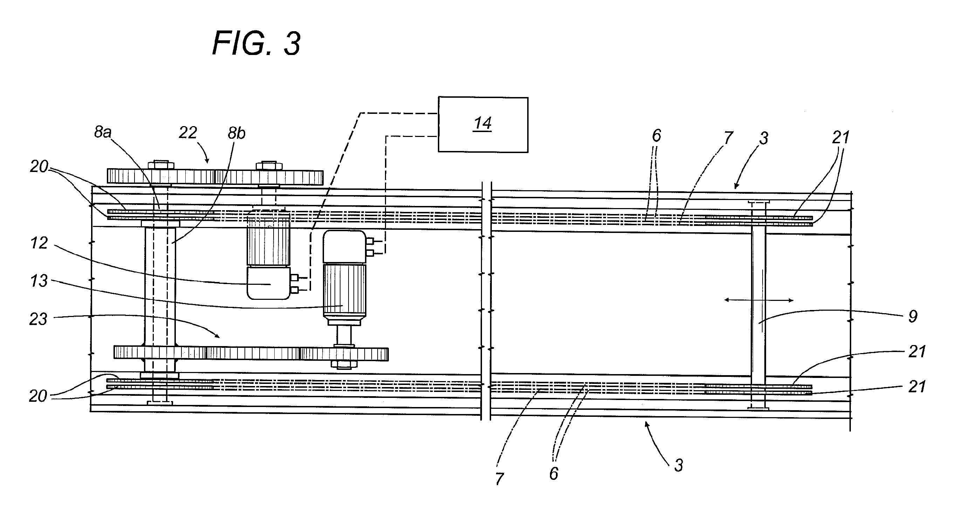

The means for driving the pushers 4 comprise at least one pair of shafts 8, 9 (Figure 3), namely, a drive shaft and a driven shaft, respectively, connected to the pulleys 20, 21 of the chain drive system 54.

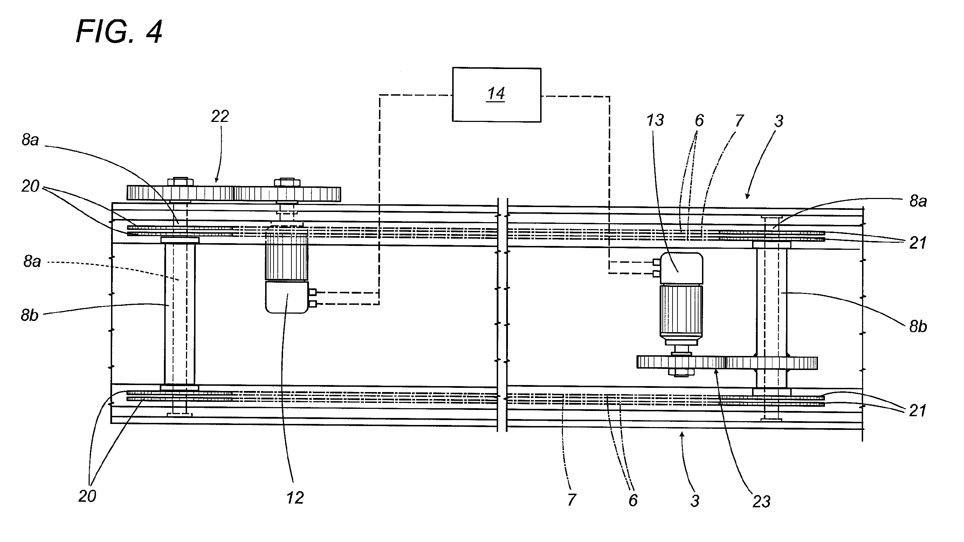

In the embodiment illustrated in Figures 3 and 4, each pair of endless chains 6, 7 is driven by a separate motor 12, 13 controlled by control means 14, illustrated schematically in the drawings, designed to vary the operating phase of the motors 12, 13 and, accordingly, the spacing between the pushers 4 according to changes in the size and packaging style of the products 5.

In a first embodiment of the machine 1 illustrated in Figure 3, the pair of endless chains 6, 7 run around two separate drive shafts 8a, 8b and a single driven shaft 9.

A first drive shaft 8b is tubular and is supported by the second drive shaft 8a, which is mounted coaxially inside the first drive shaft.

The motors 12, 13 are housed between the walls 3 of the packaging station 1a close to the first and second drive shafts 8a, 8b and are connected to the shafts by gear units 22, 23 having suitable gear ratios. A first gear unit 22, mounted on the outside of the walls 3, consists of a single pair of gear wheels. The second gear unit 23, housed on the inside of the walls 3, consists of three gear wheels, one of which is idle.

The embodiment illustrated in Figure 3, besides accomplishing the general aims of the machine 1, also has the twofold advantage of occupying little space thanks to the coaxial mounting of the drive shafts 8a, 8b of the endless chains 6, 7, and of providing convenient access to the motors 12, 13 which are mounted close to each other on one side of the machine 1.

In the embodiment illustrated in Figure 4, on the other hand, the invention envisages two pairs of shafts 8b, 8a; 8a, 8b, in each of which a first tubular shaft 8b is supported by a second shaft 8a mounted coaxially inside it. In this embodiment, the reduction gear units 22, 23 are constructed in the same way for both motors 12, 13, while the drive of each pair of shafts 8b, 8a is the inverse of the other, in the sense that in one pair of shafts, drive is connected to the inner shaft, while in the other pair, it is connected to the outer shaft.

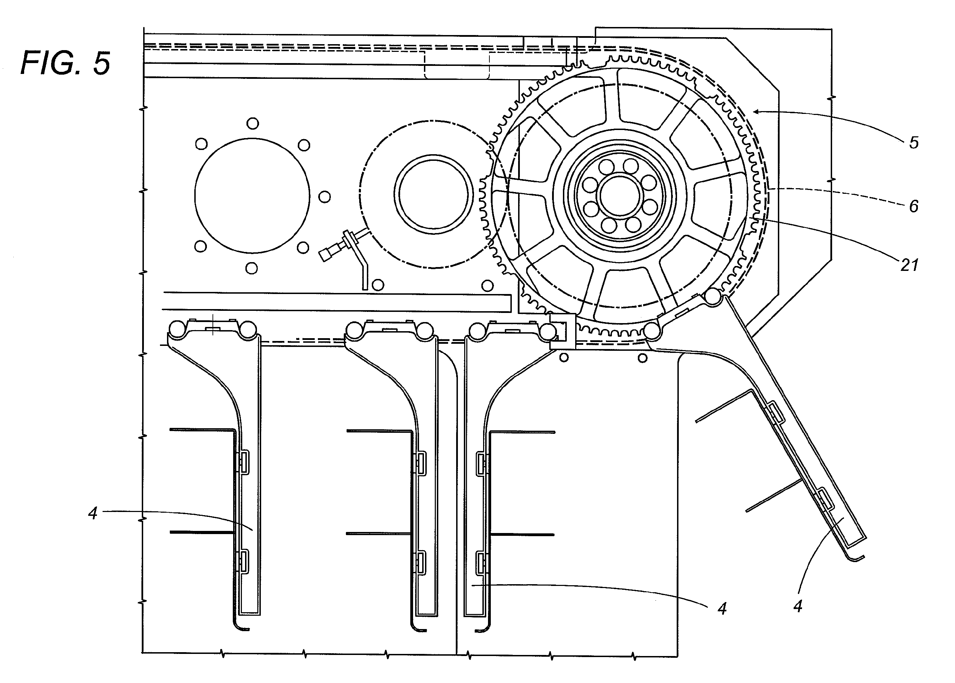

In the other embodiments of the invention illustrated in Figures 5, 6 and 7, the four endless chains 6, 7 of the chain drive system 54 are collectively driven by a single motor 12. Drive from the motor reaches the pairs of endless chains 6, 7 through a mechanical transmission system 59 which transmits the output drive of the motor 12 to two separate transmission lines labelled 60 and 61, each of which drives a pair of endless chains 6, 7.

A first transmission line 60 is composed of a train of gear wheels 60a, 60b, 60c which cause the rotation of a shaft 67 that is supported by the walls 3 of the machine 1 and that drives a pair of toothed pulleys 21 that mesh with the two outer endless chains 6 of the chain drive system 54.

The second transmission line 61 also consists of a train of gear wheels 61a, 61b, 61c, 61d: the first wheel 61a in the train receives drive from the shaft 67 and transmits it to the wheels 61d. The toothed pulleys 21 are connected to each other by an intermediate tubular shaft 19t and drive the two inner endless chains 7 of the chain drive system 54.

The packaging machine 1 is equipped with means 66; 61a, 61b, 63 for adjusting the spacing between the consecutive sets 57 of pushers 7 according to the size of the products 5 and/or of the product package style.

The adjustment means 66; 61a, 61b, 63 form part of the mechanical transmission system 59 and are designed to alter the transmission phasing of the two transmission lines 60, 61 in such a way as to change the synchronisation between them and, consequently the spacing between the sets 57 of pushers 4.

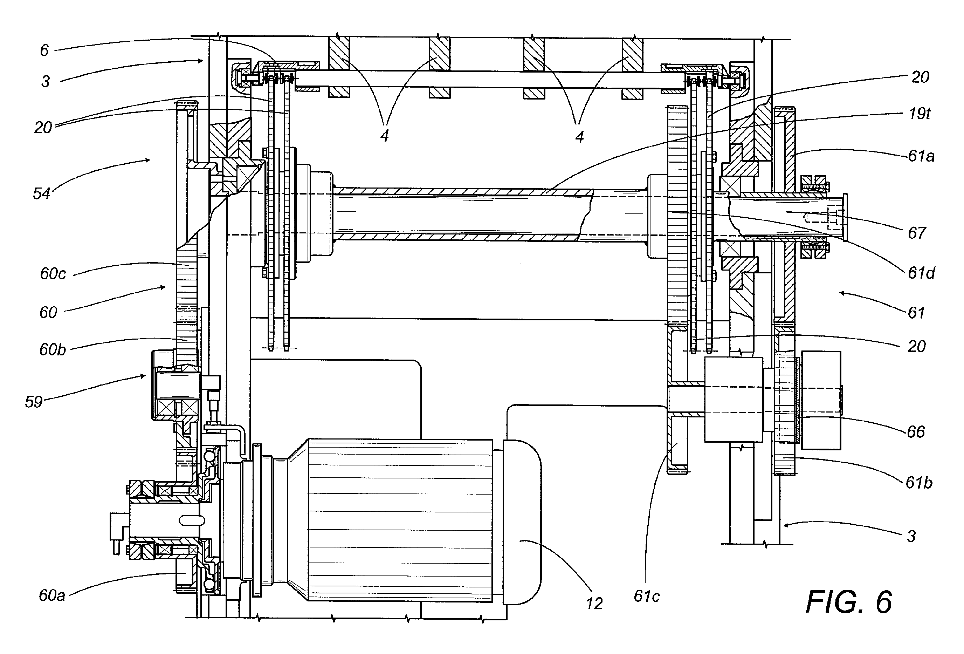

In another embodiment, illustrated in Figure 6, these adjustment means comprise a mechanical clutch 66 located on one of the transmission lines 61. The mechanical clutch 66, which, in this particular embodiment, is of the front toothed type, but which may be a clutch of any of a variety of other types, can be switched between two different states either manually or automatically from a control panel of the packaging machine 1.

In the first state, the clutch 66 allows drive to be transmitted simultaneously to both the transmission lines 60 and 61, causing the products 5 to move at a steady rate along the feed table 2. In the second state, the clutch 66 interrupts transmission of drive to one of the two transmission lines 61 so that the sets 57 of pushers 4 connected to that line do not move. While preventing these pushers from moving, the clutch 66 allows the sets 57 of pushers 4 connected to the transmission line 60 to continue moving so that the distance between them and the sets 57 being held still changes by the quantity necessary to adjust the machine 1 to a different package size.

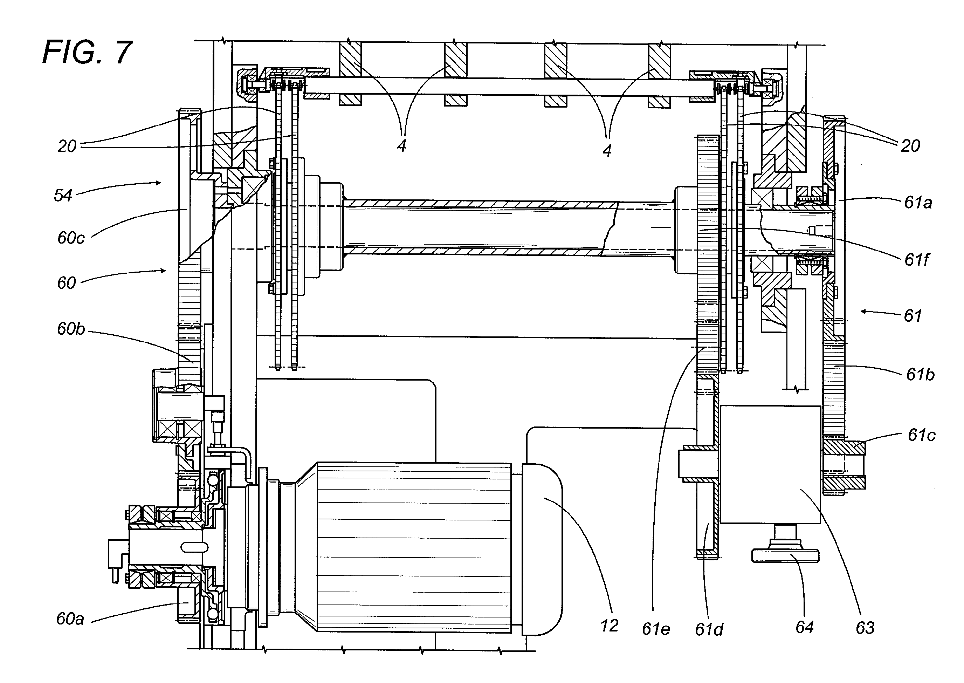

In another embodiment, illustrated in Figure 7, the adjustment means comprise a speed variator 63 connected to one of the transmission lines 61 and operated through appropriate control means, such as a handwheel, for example, but without restricting the scope of the invention, in such a way as to gradually vary the spacing between the sets 57 of pushers 4 connected to the transmission lines 60, 61.

Looking in more detail, if one of the transmission lines comprises at least one cascade of gears 61a, 61b connected according to a set ratio, the use of a speed variator 63 designed and mounted in such a way as to develop, at least in one operating condition, a gear ratio equal and opposite to that of the cascade of gears 61a, 61b, it is possible to compensate the gear ratio of the cascade of gears 61a, 61b and to equal the speed of the transmission line 61 between the section upstream of the variator 63 and the section downstream of it. Under these conditions, therefore, the presence of the variator 63 has no effect on the total gear ratio of the transmission line 61. On the contrary, for any operating condition of the variator 63 other than the first condition just mentioned, the variator 63 makes it possible to change the synchronisation between the speeds of the two transmission lines 60, 61. Therefore, by simply turning the handwheel 64 to shift the configuration of the variator 63 from said first condition, it is possible to vary the spacing of the pushers 4 according to the size and style of the products 5 or groups of products 5.

The embodiments illustrated in Figures 6 and 7 also have the advantage of permitting rapid, precise and smooth adjustment of product package size and style. Moreover, the second of these embodiments has the advantage of allowing the adjustments to be made without stopping the machine 1.

Yet another advantage of all the embodiments described herein is that they can all be automated so that changeover operations can be performed directly from the control panel without manually acting on any part of the packaging machine.

## Claims

1. An improved packaging machine for the packaging of products (5), in particular, rolls of paper, comprising a packaging station (1a) equipped with a feed table (2) for the products (5), positioned between two walls (3); a plurality of pushers (4) mounted in pairs and designed to push along the feed table (2) the products (5) which are placed between consecutive pairs of them; and means for driving the pushers (4), which include a first motor (12) to drive one pair of pushers (4) and at least one pair of shafts (8a), namely, a drive shaft and a driven shaft, said means including moreover pulleys (20, 21) and two pairs of long endless chains (6, 7) each pair running parallel to the other in a generally horizontal direction around the pulleys (20, 21) and supporting the pushers (4) extending towards the product (5) feed table (2); the first motor (12) being connected to a single pair of endless chains (6; 7); said machine (1) being **characterised in that** it comprises a second motor (13) to drive the second pair of pushers and the second pair of shafts (8b) connected to the other pair of endless chains (7; 6), said second motor (13) being independent of the first one, and the control means (14) being connected to the motors (12, 13) in such a way as to control their operating phase according to the changes in the spacing between the pushers (4) on the corresponding pairs of endless chains (6, 7).

2. The machine according to claim 1, **characterised in that** the two pairs of endless chains (6, 7) run round two separate drive shafts (8a, 8b) and a single driven shaft (9).

3. The machine according to claim 2, **characterised in that** a first drive shaft (8b) is tubular and is supported by the second drive shaft (8a), which is mounted coaxially inside it.

4. The machine according to claim 3, **characterised in that** it comprises two pairs of shafts (8a, 8b), in each of which a first tubular shaft (8b) is supported by a second shaft (8a) mounted coaxially inside it.
